# EUROPÄISCHE PATENTANMELDUNG

(11) **EP 0 704 376 A1**
(43) Veröffentlichungstag der Anmeldung: **03.04.1996**
(21) Anmeldenummer: 95810579.3
(22) Anmeldetag: 18.09.1995
(51) Int. Cl.: B65B 43/44, B65G 47/90

(54) **Verfahren zur Bereitstellung von einer Beschickungseinrichtung zugeführten Behältern**

(30) Priorität: 30.09.1994 CH 2957/94
(71) Anmelder: GRAPHA-HOLDING AG, CH-6052 Hergiswil (CH)
(72) Erfinder: Kyburz, Rudolf, CH-6260 Reiden (CH)

(57) **Zusammenfassung**

Das Verfahren dient der Bereitstellung von leeren Behältern (5), zu deren Beschickung mit Druckprodukten, wobei die in gestapelter Formation von einer Sammelstelle bzw. Stapelvorrichtung (13) an eine Entstapelungsvorrichtung (14) versetzten Behälter (5) dort an der Unterseite des Behälterstapels (9, 20) einzeln entnommen und an eine Beschickungseinrichtung (2) weitergefördert werden.

## Beschreibung

Die Erfindung betrifft ein Verfahren nach dem Oberbegriff des Patentanspruches 1.

Dieses Vorgehen wird dort angewendet, wo eine umgehende Versandbereitschaft von lose anfallenden Produkten erstellt werden muss.

So werden beispielsweise Druckprodukte nach dem Verlassen der Druckmaschine, nach dem Falzen, dem Einstecken, Zusammentragen resp. Sammeln oder nach einer anderen Verarbeitungsart einem sog. Stacker zur Stapelbildung zugeführt und anschliessend mit einem Gebinde versehen.
Letzteres erweist sich bekanntlich als nichtwiederverwertbares Verpackungsmaterial, das den Druckprodukten auf den Versandwegen keinen optimalen Schutz gegen äussere Einflüsse verleiht und nach dem Gebrauch umständlich und unter Kosten entsorgt werden muss.

Die vorliegende Erfindung schlägt deshalb den Einsatz eines wiederverwendbaren Geindes und dessen Bereitstellung zur Beschickung mit Produkten vor.

Aufgabe der Erfindung ist es, ein Verfahren der eingangs genannten Art zu schaffen, mit dem die wiederverwendbaren Gebinde vor ihrer Beschickung mit Produkten, vornehmlich Druckprodukten, auf eine einfache Art bereitgestellt werden können.

Erfindungsgemäss wird diese Aufgabe nach den Merkmalen des kennzeichnenden Teils von Patentanspruch 1 gelöst.

Bei einer bevorzugten Ausgestaltungsform des Verfahrens wird die Stapelbildung in senkrechter Richtung nach oben und die Entstapelung der Behälter an dem unteren Ende des Behälterstapels durchgeführt.

Vorteilhaft wird der Behälterstapel durch ineinandergeschachtelte Behälter gleicher Grösse und Ausgestaltungsform gebildet, derart, dass an dem offenen Ende des jeweils eingesteckten Behälters eine ergreifbare Tragvorrichtung vorliegt, sodass ein kompakter und relativ steifer Behälterstapel erstellt werden kann, mit dem der verfügbare Raum optimal genutzt wird.

Die Stapelbildung erfolgt bei senkrechter Anordnung der Behälter nach oben, wobei ein Ineinanderstecken der Behälter mit dem Boden voraus in den jeweils unteren Behälter einem Aufsetzen der Behälter entgegen ihrer Gebrauchslage vorzuziehen ist.
Auf diese Weise lässt sich eine wirtschaftliche Verarbeitungsweise erzielen.

Selbstverständlich kann die Stapelbildung auch in horizontaler Ausrichtung durchgeführt werden.

Die Behälterstapel werden vorzugsweise aus ineinandergeschachtelten, zur Beschickungsöffnung hin eine greifbare Tragvorrichtung aufweisenden Behältern gebildet, wobei diese Tragvorrichtung zum manuellen oder mechanischen Erfassen des Behälterstapels oder eines einzelnen Behälters ausgebildet ist.

Vorschlagsgemäss können der an einer Sammelstelle gebildete Behälterstapel in eine benachbarte Entstapelungsposition versetzt bzw. angehoben und die Behälter anschliessend einzeln auf den mit der Beschickungseinrichtung kommunizierenden Förderweg aufgesetzt bzw. abgesenkt werden, sodass kurze Förderwege entstehen, die ein schnelles Umsetzen erlauben.

Zweckmässig wird der an der Sammelstelle angehobene Behälterstapel mit dem unteren Ende auf einen sich in der Entstapelungsposition befindenden Reststapel aus leeren Behältern aufgesetzt.

Als anwendungsfreundlich erweist sich eine Einrichtung zur Bereitstellung von einer Beschickungseinrichtung auf einem Förderweg einzeln zugeführten, oben eine Beschickungsöffnung aufweisenden leeren Behältern zum Befüllen mit Produkten, die eine zum stapelweisen Sammeln der Behälter ausgebildete Stapelvorrichtung sowie eine benachbarte, mit letzterer und einer vorgeschalteten, wenigstens Teil eines Förderweges bildenden Fördervorrichtung förderwirksam verbundene Entstapelungsvorrichtung aufweist, die aufgrund ihrer Kompaktheit und einfachen Funktionsweise eine zuverlässige Bereitstellung der zu beschickenden Behälter gewährleistet.

Das Anheben des Behälterstapels erfolgt zweckmässig mittels eines Stapeltisches einer Stapelvorrichtung, die sich liftähnlich betätigen lässt.

Die Enstapelungsvorrichtung kann aus einer dem Behälterstapel bzw. Reststapel zugeordneten Abstützvorrichtung und einer mit dieser zusammenwirkenden, die Behälter einzeln auf die Fördervorrichtung auf- resp. absetzenden Entnahmevorrichtung bestehen, sodass ein zur wirtschaftlichen Verarbeitung der Behälter erforderlicher Behälterpuffer entstehen kann, der die Kontinuität der Bereitstellungarbeit sichert.

Zur Bildung eines Behälterpuffers in der Entstapelungsvorrichtung sind in der Abstützvorrichtung seitlich oder unterhalb eines Behälterträgers in und ausser Eingriff versetzbare Rückhaltebügel vorgesehen, die u.a. ein- und ausschaltbar, zustell- und aushebbar bzw. ein- und ausschwenkbar ausgebildet sein können.

Die Entstapelungsvorrichtung wird vorteilhaft durch eine Antriebsvorrichtung gesteuert, die ein wechselweises oder gemeinsames Zusammenwirken der Abstütz- und der Entnahmevorrichtung erzielen lässt.

Der Behälterstapel wird von der Stapelvorrichtung mittels einer den jeweils untersten Behälter erfassenden, antreibbaren Umsetzvorrichtung in die Entstapelungsvorrichtung versetzt, wozu vorteilhaft die Tragvorrichtung des Behälters vorgesehen ist.

Als Umsetzvorrichtung eignet sich zweckmässig eine an dem freien Ende eines motorisch um eine horizontale Drehachse angetriebenen Auslegers angeordnete, gesteuert mit dem Behälterträger in Eingriff bringbare Greifvorrichtung, welche durch eine den Behälterstapel während dem Umsetzen in konstanter Lage haltende Steuervorrichtung ausgebildet ist, die es erlaubt, den Behälterstapel in der angehobenen, bspw. aufrechten Formation zu übernehmen, zu halten und weiter zu transportieren.

Um den Behälterstapel von der Uebernahmestelle bis hin zur Abgabestelle in stabiler Lage zu halten, sieht die Steuervorrichtung ein mit der Greifvorrichtung verbundenes, um eine horizontale Achse gelagertes Zahn- oder Kettenrad vor, das mit einer parallel zur Umlaufbahn des Auslegers fest angeordneten Zahnstange resp. Kette oder mit einem das Zahn- oder Kettenrad wenigstens teilweise umschlingenden und etwa konzentrisch zur Drehachse des Auslegers am Umfang einer Scheibe lösbar anliegenden, endlosen Zugmittel, wie Zahnriemen oder Kette, kämmt, was sich als einfache Konstruktion erweist.

Obschon sich die Steuervorrichtung zur vollen Umdrehungsbewegung der Greifvorrichtung eignet, kann der Ausleger vorteilhaft oberhalb einer durch die Drehachse gelegten Horizontalebene um etwa 180° zwischen Annahmestelle des Behälterstapels und der Abgabestelle der Entstapelungsvorrichtung hin und her bewegbar bzw. schwenkbar angetrieben sein, wodurch eine enge Bauweise der Einrichtung erreicht werden kann.

U.a. aufgrund des Teilungsmasses an der Verzahnung, ist es vorteilhaft, wenn die Steuervorrichtung zur Bestimmung oder Einstellung einer genauen Drehlage der Greifvorrichtung verstellbar ausgebildet ist.

Die erfindungsgemässe Einrichtung ist durch das Zusammenwirken mit einer Beschickungseinrichtung in einem gemeinsamen Maschinentakt anzutreiben.

Anschliessend ist das erfindungsgemässe Verfahren und eine davon abgeleitete Einrichtung zum Bereitstellen von einer Beschickungseinrichtung auf einem Förderweg einzeln zugeführten Behältern zum Beschicken mit Produkten unter Bezugnahme auf die Zeichnung, auf die hinsichtlich aller in der beschreibung nicht weiter erläuterten Einzelheiten verwiesen wird, beschrieben. Es zeigen:
- Fig. 1: eine Seitenansicht einer erfindungsgemässen Einrichtung und die
- Fig. 2 bis 5: eine schematische Darstellung des Bereitstellungsverlaufs der Behälter.

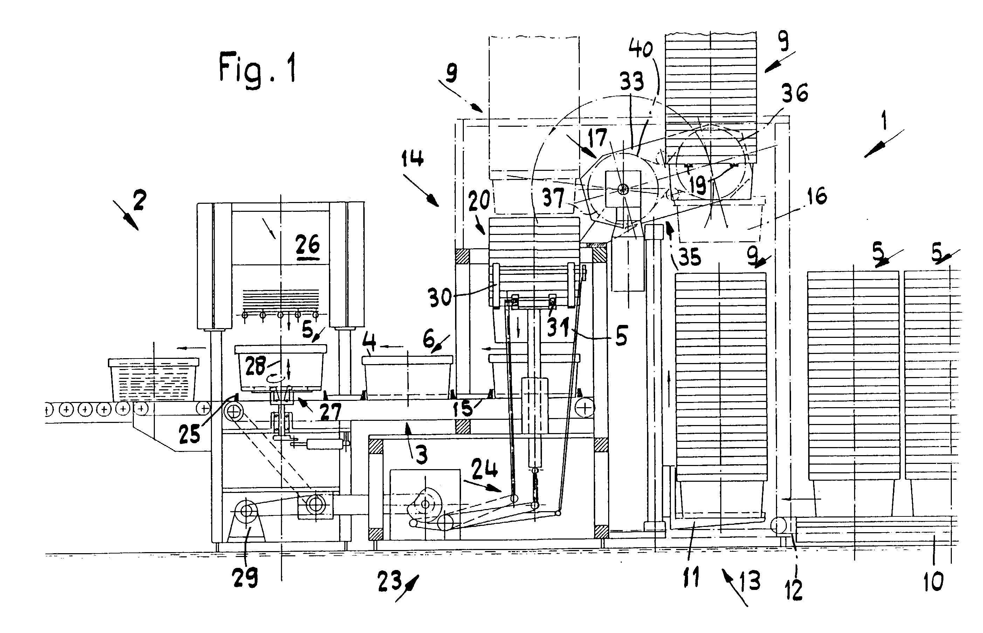

In Fig. 1 ist eine Einrichtung 1 zur Bereitstellung von einer Beschickungseinrichtung 2 auf einem Förderweg 3 zugeführten, am oberen Ende eine Beschickungsöffnung 4 aufweisenden, wenigstens teilweise leeeren Behältern 5 zum Beschicken mit Produkten 6, hier flache Druckprodukte 7, veranschaulicht.

Die einzelnen Behälter 5 werden an einer Sammelstelle 8 zu Behälterstapeln 9 ineinandergeschachtelt oder aufeinanderstehend aufgebaut. Die maximale Stapelhöhe an der Sammelstelle 8 richtet sich nach der Bauhöhe der Einrichtung 1.

Als Sammelstelle 8 eignet sich beispielsweise eine transportierbare Palette 10 oder ein Stapeltisch 11, auf den eine Palette 10 abgestellt und durch den Stapeltisch 11 angehoben werden kann. Das dargestellte Ausführungsbeispiel weist an der Sammelstelle 8 eine mit Behälterstapeln 9 besetzte Palette 10 auf, mit welcher die Behälterstapel 9 auf eine Verschiebevorrichtung 12 abgesetzt sind. Die Verschiebevorrichtung 12, beispielsweise ein Förderband, bewegt den jeweils vorderen Behälterstapel 9 in eine anheb- und absenkbare Stapelaufnahmevorrichtung 13, welcher der Stapeltisch 11 zugeordnet ist.

Benachbart zu der Stapelaufnahmevorrichtung 13 ist eine Entstapelungsvorrichtung 14 förderwirksam verbunden angeordnet, welche die Behälter 5 dem Behälterstapel 9 wieder einzeln entnimmt und sie einer aus dem Förderweg 3 gebildeten Fördervorrichtung 15 übergibt.

Vor dem Erreichen der Fördervorrichtung 15 wird der auf dem Stapeltisch 11 vorbereitete, von diesem in eine Abnahmeposition 16 hochgeliftete Behälterstapel 9 in den Wirkbereich einer Umsetzvorrichtung 17 verfahren. Durch eine mit letzterer verbundene antreibbare Greifvorrichtung 19 wird der unterste Behälter 5 an einem Behälterträger 18, der dem Behälter 5 beispielsweise durch eine wulstartige Ausbildung am oberen Rand eine höhere Festigkeit verleihen kann, erfasst, so dass der Behälterstapel 9 aufrecht und freistehend versetzt werden kann. In dieser Lage wird er durch eine Schwenkbewegung von etwa 180° im wesentlichen oberhalb einer durch die Drehachse 32 gelegten Horizontalebene durch die Umsetzvorrichtung 17 auf einen sich in der Entstapelungsvorrichtung 14 befindenden Reststapel 20 von wenigstens einem Behälter 5 verlegt bzw. eingesteck bzw. aufgesetzt.

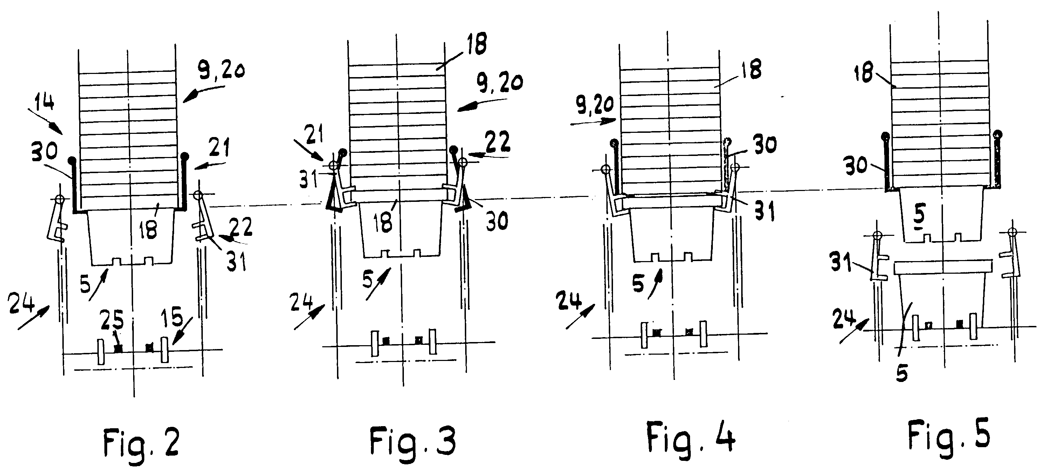

In Fig. 1 ist mit strichpunktierten Linien der kurze Moment festgehalten, bevor der Behälterstapel 9 mit dem Reststapel 20 verbunden ist. In die Entstapelungsvorrichtung 14 ist eine zur Aufnahme des Behälterstapels 9 bzw. Reststapels 20 vorgesehene Abstützvorrichtung 21 und eine jeweils den untersten Behälter 5 erfassende Entnahmevorrichtung 22 integriert, deren Zusammenwirken in den Fig. 2 bis 5 gezeigt bzw. nachvollziehbar dargestellt ist. Eine Antriebsvorrichtung 23, die mit dem Beschickungstakt gekoppelt ist, steuert in gegenseitiger Abhängigkeit die Abstützvorrichtung 21 und Entnahmevorrichtung 22 durch ein mehrfaches Hebelgetriebe 24.

Durch die Entnahmevorrichtung 22 werden die Behälter 5 von dem sich in der Entstapelungsvorrichtung 14 befindenden Behälterstapel 9 einzeln durch eine Absenkbewegung auf die Fördervorrichtung 15, die aus einem endlos umlaufenden Förderorgan oder Zugmittel mit daran befestigten Mitnehmer 25 besteht, abgesetzt, wozu ein Hebelgetriebeteil bzw. eine Kolbenzylindereinheit oder dgl. vorgesehen ist, und durch die Fördervorrichtung 15 unterhalb eine aus einem Stacker 26 gebildete Beschikkungseinrichtung 2 transportiert.

Innerhalb der Fördervorrichtung 15, die eine Führung für die Behälter 5 aufweist, ist eine drehbare Hebebühne 27 angeordnet, mit welcher die Behälter 5 von der Fördervorrichtung 15 abgehoben und anschliessend um eine senkrechte Achse 28, zur Bildung von ausgeglichenen bzw. gleichmässigen Druckproduktestapeln aus mehreren Lagen, um 180° geschwenkt werden können. Die zusammenhängend abgestimmte bzw. getaktete Arbeitsweise zwischen der Einrichtung 1 und der Beschickungseinrichtung 2 ist u.a. durch eine auf einen Motor 29 zurückgeführte Antriebsverbindung in Fig. 1 erkennbar.

Fig. 2 vermittelt die Entstapelungsvorrichtung 14 durch Einwirkung der Abstützvorrichtung 21, welche den Behälterstapel 9 resp. Reststapel 20 in Entnahmebereitschaft hält. Sog. Rückhaltebügel 30 sind von zwei Seiten, den Behälterträger 18 des untersten Behälters 5 ergreifend zugestellt, wogegen Greifgabel 31 der Entnahmevorrichtung 22 ausser Betrieb gesetzt sind. Der Behälterstapel 9, 20 befindet sich gemäss Fig. 2 in einer Wartestellung vor der Entnahme des untersten Behälters 5.

Fig. 3 offenbart den Einsatz der Entnahmevorrichtung 22 durch das Eingreifen der Greifgabeln 31, die nach Anheben aus einer Ruhelage den untersten Behälter 5 an dem Behälterträger 18 des sich in der Wartestellung befindenden Behälterstapels 9 resp. Reststapels 20 erfassen, sodass anschliessend die Abstützvorrichtung 21. bzw. die Rückhaltebügel 30 ausgeschwenkt werden können.

Der Behälterstapel 9, 20 liegt nun auf der Entnahmevorrichtung 22 auf, jeweils solange, bis letztere um etwa die Höhe des Behälterträgers 18 den Behälterstapel 9 abgesenkt hat -siehe Fig. 4- und die Rückhaltebügel 30 dem Behälterträger 18 zugestellt sind.

Fig. 5 zeigt anschliessend die letzte Aktion der Entstapelungsvorrichtung 22 bei der Bereitstellung eines Behälters 5, indem die Entnahmevorrichtung 22 den Behälter 5 bereits auf die Fördervorrichtung 15 abgesetzt hat und die Greifgabeln 31 vom Behälterträger 18 entfernt sind. Danach kann ein neuer Entnahmezyklus für einen Behälter 5 gemäss Fig. 2 beginnen. An die Fördervorrichtung 15 schliesst in Förderrichtung bzw. auf dem Föderweg der Behälter 5 ein Förderer 41 an, der die gefüllten Behälter 5 von der Beschickungsstation entfernt.

Die in Fig. 1 gezeichnete Umsetzvorrichtung 17 besteht aus einem mittels Getriebemotor 34 um eine horizontale Drehachse 32 antreibbaren Ausleger 33, der an dem schwenkbaren Ende die mit dem Behälterträger 18 in Eingriff bringbare Greifvorrichtung 19 aufweist. Um die verdrehbar gelagerte Greifvorrichtung 19 bzw. den Behälterstapel 9 während dem Umsetzen in konstanter bzw. aufrechter Lage halten zu können, ist eine Steuervorrichtung 35 vorgesehen, die ein mit der um eine horizontale Achse drehbaren Greifvorrichtung 19 verbundenes Zahn- resp. Zahnriemen- oder Kettenrad 36 aufweist. Konzentrisch zur Drehachse 32 des Auslegers 33 ist mit diesem drehfest verbunden ein gleich grosses Zahnriemenrad 37 bzw. eine Scheibe angeordnet, an welchem/welcher ein Zahnriemen oder eine Kette 38 lose anliegt, welcher Zahnriemen 38 das am äussern Ende des Auslegers 33 gelagerte Zahnrad 36 der Greifvorrichtung 19 teilweise umschlingt. Auf diese Weise kann bei einer Schwenkbewegung des Auslegers 33 die Greifvorrichtung 19 in konstanter Lage gehalten werden.

Zum Spannen des Zahnriemens 38 oder einer Kette ist wenigstens eine auf ein Trum einwirkende Gegenrolle 40 vorgesehen.

Damit die konstante Lage der Greifvorrichtung 19 geändert werden kann, ist beispielsweise das Zahnriemenrad 37 lösbar bzw. verdrehbar an dem Ausleger 33 befestigt.

## Patentansprüche

1. Verfahren zur Bereitstellung von einer Beschickungseinrichtung auf einem Förderweg einzeln zugeführten, oben eine Beschickungsöffnung aufweisenden, wenigstens teilweise leeren Behältern zum Beschicken mit Produkten, dadurch gekennzeichnet, dass die gestapelten Behälter an ihrem in Stapelbildungsrichtung entgegengestzten Ende entstapelt werden.

2. Verfahren nach Anspruch 1, dadurch gekennzeichnet, dass die Stapelbildung in senkrechter Richtung, nach oben oder unten, und die Entstapelung des Behälterstapels an dem unteren Ende des Behälterstapels vorgenommen wird.

3. Verfahren nach Anspruch 1 oder 2, dadurch gekennzeichnet, dass der Behälterstapel aus ineinandergeschachtelten, zur Beschickungsöffnung hin eine greifbare Tragvorrichtung bildenden Behältern besteht.

4. Verfahren nach einem der Ansprüche 1 bis 3, dadurch gekennzeichnet, dass der an einer Sammelstelle gebildete Behälterstapel in eine benachbarte Entstapelungsposition versetzt bzw.angehoben und die Behälter anschliessend auf den mit der Beschickungseinrichtung kommunizierenden Förderweg aufgesetzt bzw. abgesenkt werden.

5. Verfahren nach Anspruch 4, dadurch gekennzeichnet, dass der an der Sammelstelle angehobene Behälterstapel mit dem unteren Ende auf einen sich in der Entstapelungsposition befindenden Reststapel aufgesetzt wird.

6. Einrichtung zur Bereitstellung von einer Beschickungseinrichtung auf einem Förderweg einzeln zugeführten, oben eine Beschickungsöffnung aufweisenden leeren Behältern (5) zum Befüllen mit Produkten (6), dadurch gekennzeichnet, dass diese eine zum stapelweisen Sammeln oder Zustellen der Behälter (5) aus gebildete Stapelaufnahmevorrichtung (13) sowie eine benachbarte, mit letzterer und einer vorgeschalteten, wenigstens Teil eines Förderweges (3) bildenden Fördervorrichtung (15) förderwirksam verbundenen Entstapelungsvorrichtung (14) aufweist.

7. Einrichtung nach Anspruch 6, dadurch gekennzeichnet, dass die Stapelaufnahmevorrichtung (13) einen etwa senkrecht anheb- und absenk baren Stapeltisch (11) aufweist.

8. Einrichtung nach Anspruch 6, dadurch gekennzeichnet, dass die Entstapelungsvorrichtung (14) eine mit einer dem Behälterstapel (9) zugeordneten Abstützvorrichtung (21) und eine mit dieser zusammenwirkenden, die Behälter (5)auf die Fördervorrichtung (15) auf- resp. absetzenden Entnahmevorrichtung aufweist.

9. Einrichtung nach Anspruch 8, dadurch gekennzeichnet, dass die Abstützvorrichtung (21) seitlich oder unterhalb eines Behälterträgers (18) zustellbare Rückhaltebügel (30) aufweist.

10. Einrichtung nach Anspruch 8, dadurch gekennzeichnet, dass die anheb- und absenkbare Entnahmevorrichtung (22) durch wenigstens eine, den jeweils untersten Behälter (5) an einem Behälterträger (18)erfassenden, antreibbaren Greifgabel (31) ausgebildet ist.

11. Einrichtung nach den Ansprüchen 8 bis 10, dadurch gekennzeichnet, dass die Entstapelungsvorrichtung (14) mit einer die Abstützvorrich-(21) und die Entnahmevorrichtung (22) steuern den Antriebsvorrichtung (23) verbunden ist.

12. Einrichtung nach einem der Ansprüche 6 bis 11, dadurch gekennzeichnet, dass zwischen Stapelaufnahmevorrichtung (13) und Entstapelungsvor richtung (14) eine den in der Stapelaufnahme vorrichtung (13) untersten Behälter (5) eines Behälterstapels (9) erfassende antreibbare Umsetzvorrichtung (17) angeordnet ist.

13. Einrichtung nach Anspruch 12, dadurch gekennzeichnet, dass die Umsetzvorrichtung (17) eine an dem freien Ende eines motorisch um eine horizontale Drehachse (32) angetriebenen Aus legers (33) angeordnete, mit dem Behälterträ ger (18) in Eingriff bringbare Greifvorrich tung (19) aufweist, die durch eine den Behäl terstapel (9) während dem Umsetzen in konstan ter Lage haltende Steuervorrichtung (35) ausgebildet ist.

14. Einrichtung nach Anspruch 13, dadurch gekennzeichnet, dass die Steuervorrichtung (35) ein mit der Greifvorrichtung (19) verbundenes, um eine horizontale Achse gelagertes Zahn- oder Kettenrad (36) aufweist, das mit einer parallel zur Umlaufbahn des Auslegers (33) fest angeordneten Zahnstange resp. Kette oder mit einem das Zahn- oder Kerrenrad (36) wenigstens teilweise umschlingenden und etwa konzentrisch zur Drehachse (32) des Auslegers (33) am Um fang einer Scheibe resp. eines Zahnriemenrades (37) lösbar anliegenden, endlosen Zugmittel, wie Zahnriemen oder Kette kämmt.

15. Einrichtung nach Anspruch 14, dadurch gekennzeichnet, dass der Ausleger (33) oberhalb einer durch die Drehachse (33) gelegten Horizon talebene um etwa 180° hin- und her schwenkbar angetrieben ist.

16. Einrichtung nach Anspruch 15, dadurch gekennzeichnet, dass die Steuervorrichtung (35) zur Bestimmung der Drehlage der Greifvorrichtung (19) verstellbar ausgebildet ist.

17. Einrichtung nach den Ansprüchen 6 bis 16, dadurch gekennzeichnet, dass diese im Maschinentakt der Beschickungseinrichtung (2) angetrieben ist.
